(19) Europäisches Patentamt
European Patent Office
Office européen des brevets

(11) **EP 3 402 027 B1**

(12) **EUROPEAN PATENT SPECIFICATION**

(45) Date of publication and mention of the grant of the patent:
**09.12.2020 Bulletin 2020/50**

(21) Application number: **18170156.6**

(22) Date of filing: **30.04.2018**

(51) Int Cl.:
***H02G 5/06*** (2006.01)

(54) **HIGH-VOLTAGE INSULATOR ARRANGEMENT FOR INSULATION OF A CONDUCTOR OF A DC GAS-INSULATED SYSTEM, AND GAS-INSULATED SYSTEM FOR DC OPERATION COMPRISING A HIGH-VOLTAGE INSULATOR ARRANGEMENT**

HOCHSPANNUNGSISOLATORANORDNUNG ZUR ISOLIERUNG EINES LEITERS EINES GLEICHSTROMGASISOLIERTEN SYSTEMS UND GASISOLIERTES SYSTEM FÜR GLEICHSTROMBETRIEB MIT EINER HOCHSPANNUNGSISOLATORANORDNUNG

AGENCEMENT D'ISOLATION HAUTE TENSION POUR ISOLATION D'UN CONDUCTEUR D'UN SYSTÈME À ISOLATION GAZEUSE EN COURANT CONTINU ET SYSTÈME ISOLÉ AU GAZ POUR FONCTIONNEMENT EN COURANT CONTINU COMPRENANT UN AGENCEMENT D'ISOLATION HAUTE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2017 LU 100195**

(43) Date of publication of application:
**14.11.2018 Bulletin 2018/46**

(73) Proprietor: **ABB Power Grids Switzerland AG
5400 Baden (CH)**

(72) Inventors:
• **Gremaud, Robin
8006 Zürich (CH)**
• **Donzel, Lise
5430 Wettingen (CH)**
• **Erford, Tobias
8050 Zürich (CH)**

(74) Representative: **Michalski Hüttermann & Partner Patentanwälte mbB
Speditionstraße 21
40221 Düsseldorf (DE)**

(56) References cited:
**EP-A1- 2 922 162     EP-A2- 0 577 346
DE-A1- 2 625 071     DE-A1- 3 634 946
JP-A- H0 937 446     JP-A- S5 795 110
US-A- 4 161 621**

**Description**

TECHNICAL FIELD

The disclosure relates to a high-voltage insulator arrangement for insulation of a conductor of a DC gas-insulated electrical system. The disclosure further relates to a gas-insulated electrical system for DC operation comprising a high-voltage insulator arrangement described herein, and the use of a high-voltage insulator arrangement in a gas-insulated electrical system in DC operation.

BACKGROUND ART

In gas-insulated electrical systems (GIS), the dielectric strength of a high-voltage insulator is a key factor for defining the rated operating conditions. Examples for a high-voltage insulator of a GIS comprise a partition and support insulator, a push-pull rod, a glass-fiber or aramide reinforced loops, etc.

In recent years, it has become more common to transmit larger amounts of electrical energy via DC links. The electric behavior of a DC GIS is significantly different from an AC GIS. In an AC system, due to the periodicity of voltage and current, states of zero current and of zero voltage occur twice per period, such that a charge accumulation on the surface of a high-voltage insulator in an AC GIS does virtually not occur.

However, in a DC system such as a DC GIS, the high-voltage insulator is subject to a distribution of the electric field which is not comparable to that of an AC system. Electric charges may accumulate on the surface of the high-voltage insulator, which may finally lead to a breakdown along the insulator surface. Charge accumulation on the insulator surface may occur e. g. due to charge emission in the gas because of roughness, protrusions, particles or switching operations.

A charge accumulation leads to a surface potential distortion and to a reduction to the breakdown strength, and it is therefore undesired. A possible way to minimize the surface charging is to modify the surface conductivity of the surface of the insulator.

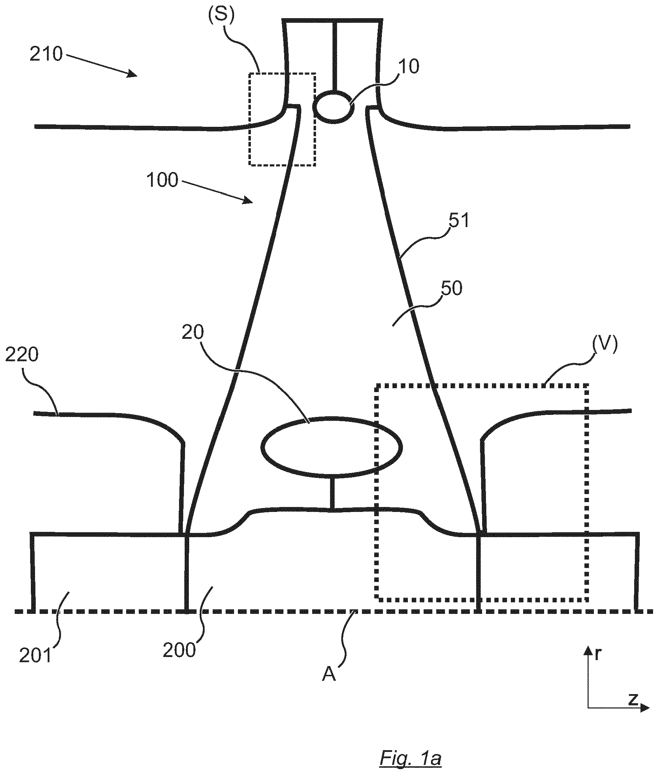

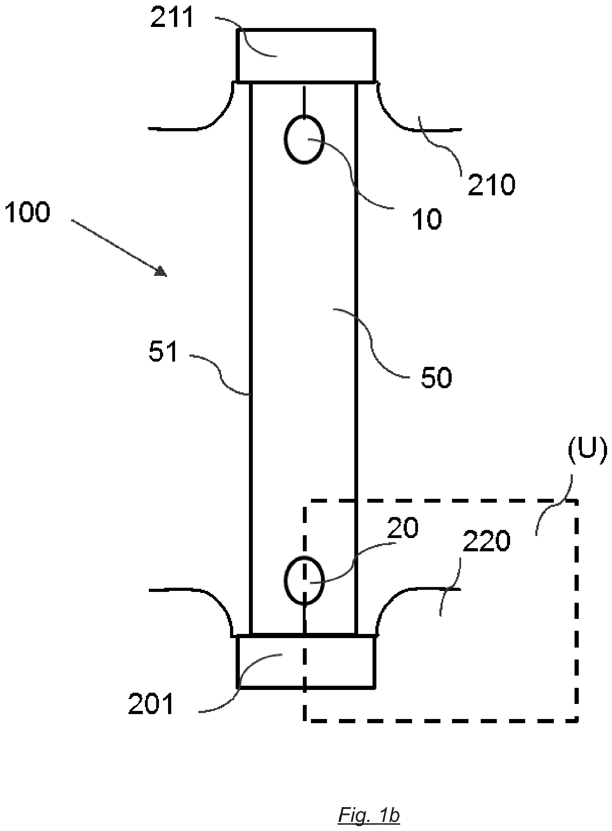

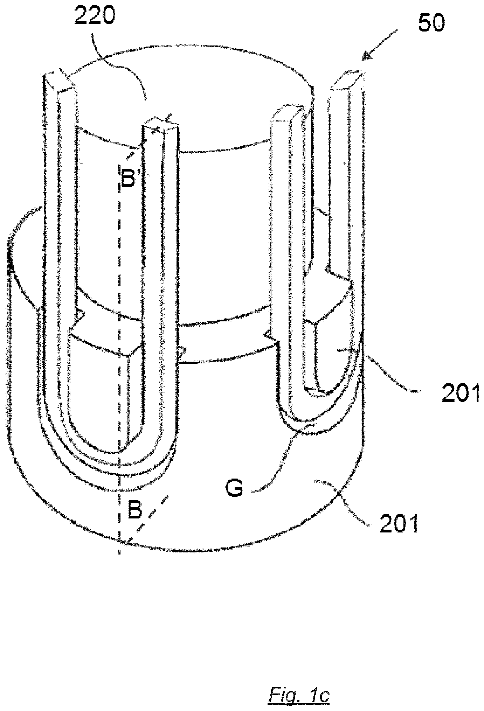

An example of a partition high-voltage insulator 100 is shown in a cross-sectional view of Fig. 1. The insulator 100 is rotationally symmetric about an axis A. In the drawings, a radial direction r of the insulator 100 extends from the axis A in the vertical direction of the plane of projection. The insulator 100 has an insulator body 50 and an insulator surface 51. A metallic insert 200 of the insulator 100 is connectible to a high voltage DC conductor 201.

A conductor-side electrode 20 is provided inside the bulk of the insulator body 50 in the vicinity of the metallic insert, and the electrode 20 is connected to the metallic insert 200. Thus, when energized, the electrode 20 is on a high voltage potential. Likewise, an enclosure-side electrode 10 is provided inside the bulk of the insulator body 50 in the vicinity of the enclosure 210 of a gas-insulated system (GIS), and connected to the enclosure. The enclosure 210, or an electrically conductive support section, is electrically conductive and on ground potential. In an installed state, the enclosure-side electrode 10 is also on ground potential.

In the GIS, in a gas space between the conductor 201 and the enclosure 210, a metallic high voltage electrode 220 is provided which is in contact with the conductor 201. The gas space is filled with an insulating gas such as, but not limited to, $SF_6$.

The surface 51 of the insulator 100 is treated in a way such that its electrical conductivity is higher than the underlying bulk material of the insulator body 50. The electrical conductivity of the surface 51 may be higher only when a high electrical (DC) field is present along the surface 51, i. e. having a field-dependent conductivity. Typically, the electrical conductivity of the surface 51 is higher than the electrical conductivity of the body 50 by about two to five orders of magnitude. Exemplary, non-limiting processes for enhancing the electrical conductivity of the surface 51 are surface treatment (e. g., fluorination, ion implantation) or applying a resistive thick or thin coating (applying a resistive paint).

Document JP H09 37446 A describes an insulator for gas-insulated equipment. A resistance layer is provided on a surface of an insulation spacer for subdivision. A voltage assignment rate of the creeping of an insulator for gas-insulated equipment in the direction of a grounding tank from the conductor is made constant.

Document DE 26 25 071 A1 describes a method for increasing the resistivity at surfaces of insulators made from an anorganic material. Ions or atoms are implanted into a surface volume of the insulator.

Document JP S57 95110 A shows an insulating spacer for supporting a charge/discharge unit in a grounded tank of a gas-insulated switchgear.

Document EP 0 577 346 A2 describes a gas-insulated high voltage electrical apparatus having a tank filled with an insulating gas such as $SF_6$, a high voltage conductor inside the container and an insulating component connected to the conductor. The insulating component comprises an insulator body having, on its surface exposed to said insulating gas, a film of an electrically conductive or semi-conductive material.

Document EP 2 922 162 A1 describes an insulator in an electrical substation. The insulator has a base section and a vertex section. In a periphery of at least one of the base and vertex sections, the document discloses a geometric shape having a protrusion with respect to an axial direction.

Document US 4,161,621 A discloses a spacer mount for use in gas insulated transmission lines is comprised of two parts, each of which having a radially inwardly extending nub, and at least one of which having a longitudinally extending section to which the other member is secured. The two nubs are spaced apart a distance substantially equal to the longitudinal width of the spacer which is mounted therebetween.

PROBLEMS TO BE SOLVED BY THE DISCLOSURE

In order to control the electric potential distribution along the insulator during operation, electrical currents have to be injected or collected to and from the high voltage conductor 201 or the metallic insert 200, and the grounded parts 210. A reliable (good, robust, durable) contact between the insulator surface 51 and the metal parts 200, 210, 220 is desirable for the entire lifetime of the insulator 100. A particular sensitive area of the insulator surface 51 is a "triple point", i. e. a location at which the three different materials of the insulator surface 51, any one of the metal parts 200, 210, 220 and the insulating gas abut.

During DC operation, the electric potential distributions within the solid insulation of the insulator body 50, on the surface 51 and in the insulating gas are different. The potential distribution along the surface 51 extends essentially between a first triple point and a second triple point. The first triple point is an area where the insulating gas and the insulator surface 51 meet a conductor on high voltage (201). The second triple point is an area where the insulating gas and the insulator surface 51 meet a conductor on ground potential (210)

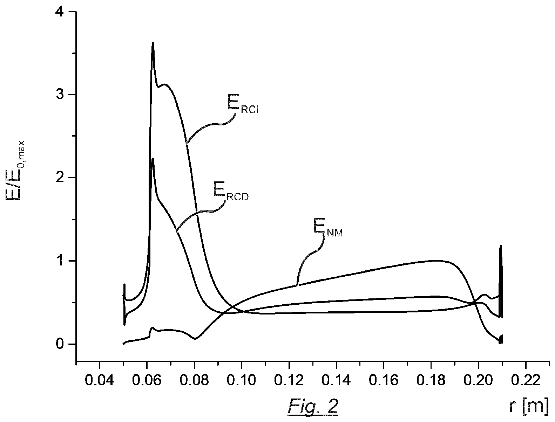

For the insulator shown in Fig. 1a, a comparison of distributions of the resistive (DC) electric field along the insulator surface 51 on the gas side is shown in Fig. 2. $E/E_{0,max}$ denotes the normalized DC field, and r denotes the radius (cf. Fig. 1) of the insulator 100. $E_{NM}$ is a graph showing the distribution of the normalized DC field when no modification of the surface 51 has been carried out, i. e. of an insulator 100 without an insulator surface 51 having a higher conductivity than the body 50. $E_{RCI}$ is a graph showing the distribution of the normalized DC field with field-independent resistive coating on the insulator surface 51. $E_{RCD}$ is a graph showing the distribution of the normalized DC field with field-dependent resistive coating on the insulator surface 51. The field-dependent resistive coating has been exemplary obtained by carrying out a process as described in DE 36 34 946 A1.

As can be seen, when the insulator surface (51) is more conducting than the insulator body the electric filed is increased in the regions (V) and (S). The intensity of the electric field can increase to a level where streamer inception is initiated if particles are present in the GIS system. It is therefore desirable to improve the electric field distribution of a high-voltage insulator for insulation of a DC conductor of a gas-insulated electrical system.

SOLUTION TO THE PROBLEMS

According to an aspect of the present disclosure, a high-voltage insulator arrangement is provided as defined in claim 1.

According to the invention, the high-voltage insulator arrangement comprises a high-voltage insulator and a contacting element. The high-voltage insulator is provided for insulation of a conductor of a DC gas-insulted system. The high-voltage insulator comprises an insulator body and an insulator surface, wherein the electrical conductivity of the insulator surface is higher than the electrical conductivity of the insulator body. The contacting element comprises an insulator side face having a first height for connecting a predetermined length of the insulator surface to a definite potential, the contacting element further extending by a total width in a width direction away from the insulator surface up to an end face. A second height of the contacting element at the end face is lower than the first height and the height of the contacting element from the first height to the second height reduces at a gradient angle such that a gas side face of the contacting element is slanted.

A contacting element having a first height and a second height, the second height being lower, or less, than the first height, may result in an arrangement of "triple points" which is favorable in view of a distribution of the electric field, such as the resistive and/or the capacitive electric field. By the solution, a tangential field component may be introduced by the contacting element to help giving the electric field a desired distribution, such that particles which may be present in the insulating gas of a gas-insulated DC electrical system do not adversely affect an operation of the high-voltage insulator.

With the contacting element, a proper contacting of the predetermined length of the insulator surface to a definite potential is possible. The width of the contacting element is chosen to ensure a sufficient current carrying capability.

In other words: The electric field, in particular the resistive field, is coordinated in such a way that leakage currents flowing through the high-voltage insulator are collected, and the field is shaped in such a way that particles which may be present in the insulating gas do not influence the insulation properties in a negative manner.

Typically, the contacting element is different from an enclosure of the DC gas-insulated electrical system. Further typically, the contacting element is different from a conductor of the DC gas-insulated system. Preferably, the contacting element is provided as a separate part not integrally formed with either of the enclosure and the conductor. The contacting element may be provided as a contacting member, e. g. a detachable contacting member, such as a contacting ring.

In embodiments, the contacting element is formed as a contacting ring continuously extending around a periphery of the insulator body. A continuous contacting ring may help to ensure a favorable distribution of the electric field.

In embodiments, the end face of the contacting element abuts on an element of the DC gas-insulated electrical system, the element of the DC gas-insulated electrical system being on the definite electrical potential.

5       EP 3 402 027 B1       6

Alternatively, a conductor-side face of the contacting element abuts on an element of the DC gas-insulated electrical system, the element of the DC gas-insulated electrical system being on the definite electrical potential. Abutting, as used in this context, may comprise a close contact between the respective elements, such as a low impedance electrical contact, without the respective elements being integrally joined to each other.

In embodiments, the height of the contacting element from the first height to the second height reduces at a gradient angle, wherein the gradient angle is smaller than 80°. According to certain aspects, the gradient angle is within a range of 30° to 60°. According to certain aspects, the height of the contacting element from the first height to the second height reduces in a substantially linear manner. Alternatively, the height of the contacting element from the first height to the second height may reduce in a curved (convex, concave) manner.

As non-limiting examples, the material used for the contacting element is a combination of at least one filler material and a base material. The base material may be a compliant material. A soft material may provide a better contact to the insulator. The base material may comprise ethylene propylene diene (EPDM), polyolefin, polyester, fluoropolymer elastomer.

In embodiments, the filler material comprises a conductive material, such as carbon black. In other embodiments, the filler material comprises a field grading material. The filler material may comprise $Cr_2O_3$, $Fe_2O_3$, $TiO_2$, SiC, ZnO.

According to an aspect of the present disclosure, a gas-insulated electrical system for DC operation according to claim 10 is provided. The system comprises the high-voltage insulator arrangement disclosed herein. The gas-insulated electrical system further comprises at least one electrically conductive element on a definite electrical potential, and a space filled with insulation gas, wherein a gas side face of the contacting element is exposed to the insulation gas. A face different from the insulator side face of the contacting element is contacted to the electrically conductive element.

In embodiments, the electrically conductive element is an electrode which is to be arranged at a gap distance from the insulator surface. The electrode may be, but is not limited to, a shielding electrode such as an additional high voltage electrode, or an enclosure of the system.

In embodiments, the gap distance substantially corresponds to the total width of the contacting element, wherein the relationship of the total width to a minimum height of the electrode fulfils the following expression: $0.1 \leq w/h_{cap} \leq 0.7$.

In embodiments, the relationship of the first height of the contacting element to a minimum height of the electrode fulfils the following expression: $0.1 \leq h_{res}/h_{cap} \leq 0.7$.

In embodiments, the at least one electrically conductive element is a DC conductor.

According to an aspect of the present disclosure, a high-voltage insulator, as disclosed herein, is used in a gas-insulated electrical system as described herein. The gas-insulated electrical system is preferably a gas-insulated high-voltage apparatus. In an operational state of the use, a DC voltage is applied to the DC conductor.

BRIEF DESCRIPTION OF THE DRAWINGS

The disclosure is described in more detail by reference to the accompanying drawings, wherein:

Fig. 1      a is a schematic sectional view of a high-voltage partition insulatorin a gas-insulated electrical system for explaining embodiments of the disclosure;

Fig. 1bis      a schematic sectional view of a high-voltage pull rod insulator for use in a gas-insulated electrical system;

Fig. 1c      is a schematic perspective view of a high-voltage loop insulator for use in a gas-insulated electrical system;

Fig. 2      is a diagram showing a comparison of distributions of the resistive electric field along an insulator surface on a gas side;

Fig. 3      is a detailed view of a region V of Fig. 1 showing, among others, a contacting element of a high-voltage insulator according to an embodiment of the present disclosure;

Fig. 4      is a detailed view of a region V of Fig. 1 showing, among others, a contacting element of a high-voltage insulator according to another embodiment of the present disclosure;

Fig. 5      is a combined diagram showing an arrangement of a contacting element of a high-voltage insulator according to an embodiment of the present disclosure, and a corresponding field distribution of the resistive and the capacitive electric fields along an insulator surface on a gas side;

Fig. 6      is a detailed view of a region V of Fig. 1 showing, among others, a contacting element of a high-voltage insulator according to yet another embodiment of the present disclosure; and

Fig. 7      is a detailed view of a region V of Fig. 1 showing, among others, a contacting element of a high-voltage insulator according to yet another embodiment of the present disclosure.

4

Fig. 8     is a detailed view of a region U of Fig. 1b showing, among others, a contacting element of a high-voltage insulator not part of the invention.

Fig. 9     is a detailed view of a cross -section BB' of Fig. 1c showing, among others, a contacting element of a high-voltage insulator according to yet another embodiment of the present disclosure.

DESCRIPTION OF EMBODIMENTS

In the following, embodiments of the disclosure are described by making reference to the accompanying drawings. In the drawings, like elements and parts are denoted with same reference symbols. The embodiments may be freely combined, or certain aspects may be omitted, as appropriate and as understood by the skilled person.

Fig. 1b shows a pull rod insulator (100) in a cross-sectional view. The insulator extends between a conductor on a high voltage potential (201) and a conductor on ground potential (211). Metallic electrodes (10, 20) are provided inside the bulk of the insulator body 50 and connected to the electrodes (210, 220). Metallic electrodes (210, 220) are provided inside the gas space and connected to the conductors (211, 201).

Fig. 1c shows the one end of an arrangement with loop insulators (100) in a perspective view. The loop insulators extend between one conductor on high potential (201) and one conductor on ground potential (not shown). The one end of the loop is inserted in a groove of the conductor (201) (G). The electrode (220) is connected to the conductor (201).

In drawings 3 to 7, to be described in the following, the sectional plane is the r-z plane in a cylindrical coordinate system, wherein the z-axis coincides with a rotational axis A of the high-voltage insulator 100. A distance r in the radial direction is measured from the axis A. Furthermore, the circumference direction is defined by a polar angle $\varphi$ (not shown).

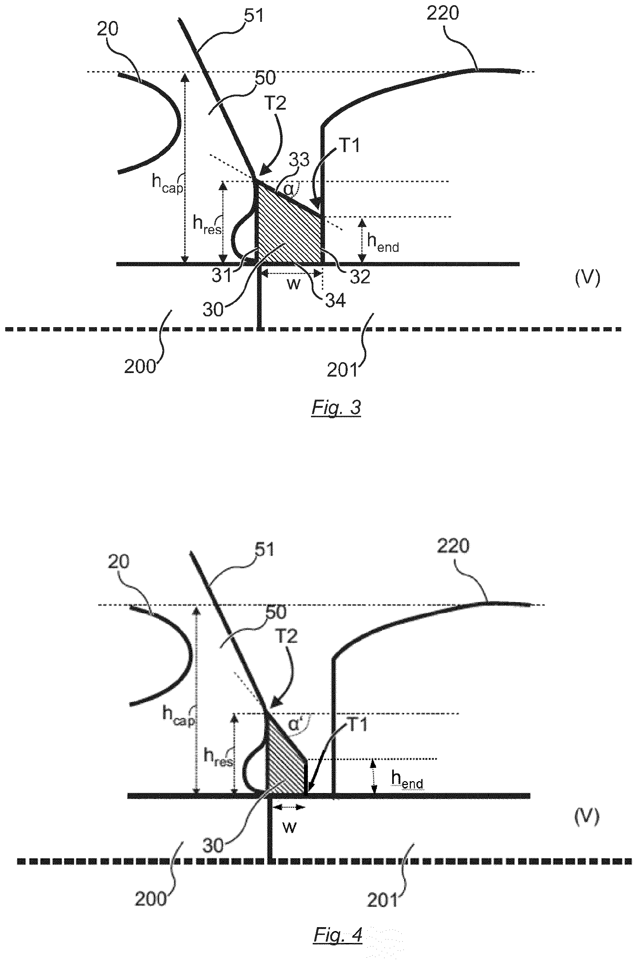

Fig. 3 shows a detailed view of a region V of the sectional view of Fig. 1a which has already been described above. In the embodiment shown in Fig. 4, an electrical conductivity of an insulator surface 51 of a high-voltage insulator 100 is higher than the electrical conductivity of an insulator body 50 of the high-voltage insulator 100, at least when a high DC electric field is present along the surface 51. An insulator body 50 is made, for example, of a suitable insulating material such as an epoxy resin, which may be supplemented by various fillers. In the embodiments shown herein, the body 50 is symmetric with respect to the A-axis, but not limited to such a symmetric configuration.

The electrical conductivity of the surface 51 is, for example, higher by two to five orders of magnitude, but not limited thereto. The electrical conductivity is enhanced by a suitable process, e. g. by fluorination, ion implantation or by applying a coating.

Inside the body 50 in the depicted region V of Fig. 3, a conductor-side electrode 20 is provided.. The conductor-side electrode 20 is shown only in a schematic manner, and the cross-section of the conductor-side electrode 20 is not limited to an oval shape. In the embodiments, during operation of the system, the conductor-side electrode 20 is on a definite electric potential, in particular the potential of a metallic insert 200 described below.

A metallic insert 200 of the insulator 100 is connectible to a DC conductor 201 of a gas-insulated electrical system. During operation of the system, a nominal DC voltage is applied to the metallic insert 200 through the DC conductor 201. The metallic insert 200 may be cast into the bulk material of the insulator body 50.

The metallic insert 200 is not necessarily part of the high-voltage insulator 100 but can be, at least partially, a part of it. The insert 200 is supported by the body 50 of the insulator 100. During an operation, a DC high voltage is applied to the insert 200. The DC high voltage may be more than $\pm 100$ kV or more than $\pm 200$ kV, but is not limited to these exemplary operational values.

Arranged at a gap distance away from the insulator, a metallic high voltage electrode 220 is provided. During operation of the system, the electrode 220 is on a definite electric potential.

In the example shown in Fig. 3, during operation, the electrode is on high voltage DC potential. Due to the gap distance, the electrode 220 is not in direct contact with the insulator surface 51.

A contacting element 30 is provided between the insulator surface 51 and the electrode 220. Typically, the contacting element 30 is continuous in a circumferential direction, e. g. in the form of a contact ring. The contacting element 30 has a face (an insulator side face 31) which abuts on the insulator surface 51. The contacting element 30 further has a face (an end face 32) opposite to the insulator side face 31. The contacting element 30 extends in a width direction in between the insulator side face 31 and the end face 32, i. e. it extends in the width direction away from the insulator surface 51 up to the end face 32. The extension amount in the width direction, at least in an area between the abutting part of the insulator side face 31 and the end face 32, is a total width w of the contacting element.

On the end face 32, the contacting element 30 abuts on the element which provides a definite electrical potential. In the embodiment of Fig. 3, the end face 32 abuts on the electrode 220. Alternatively or additionally, another face 34 different from the insulator side face 31 may abut on an element which provides a definite electrical potential. In the embodiment, a conductor-side face 34 abuts on the DC conductor 201, in addition to the end face 32 abutting on the electrode 220.

The contacting element 30 is a distinct part, or member. The contacting element 30 may be formed independent from a main element of the DC gas-insulated electrical system on the definite electrical potential. Examples for a main element on the definite electrical potential include an enclosure or an enclosure part of the DC gas-insulated electrical system, and a conductor or conductor part of the DC gas-insulated electrical system. The shape of the contacting element 30, in particular the shape relating to the second height $h_{end}$ to be less than the first height $h_{res}$, is easily achieved by employing a distinct part.

The contacting element 30 contacts a predetermined height of the insulator surface 51 by abutting on it with its insulator side face 31. In an exemplary partition insulator, as that one of Fig. 1a, the height of the insulator surface 51 corresponds to an extension in the radial direction r of the insulator 100. The height typically includes the respective extension on the entire circumference of the insulator 100.

The insulator side face 31 has a first height $h_{res}$ for providing the electric contact with the predetermined height of the insulator surface 51. The end face 32 has a second height $h_{end}$. The second height $h_{end}$ is less than the first height $h_{res}$.

The contacting element 30 may help to provide a proper contacting of the predetermined height of the insulator surface 51 to a definite potential. The width of contacting element w, may help to ensure a sufficient current carrying capability With the solution of the embodiments, the electric field strength is alleviated.

A capacitive screening effect of the electrode 20, 220 is ineffective in reducing the potential drop caused by an applied DC voltage. With the contacting element 30, the electric field strength is alleviated (i. e. the potential drop within the gas gap is reduced), while at the same time a capacitive screening effect of the electrode 20,220 is maintained.

When $\sigma$ is the conductivity, and an index c denotes the insulator surface characteristics and $ri$ denotes the characteristics of the contacting element, the condition on the contacting element 30 to alleviate the DC electric field strength in its vicinity is $\sigma_{ri} w_{ri} > \sigma_c w_c$.

According to the invention, the height of the contacting element 30 is reduced, from the first height $h_{res}$ to the second height $h_{end}$, at a gradient angle $\alpha$, such that a gas-side face 33 of the contacting element 30 is slanted. In the case of a linear gradient, the gradient angle $\alpha$ is an angle between a line perpendicular to the surface of the insulator and a line from the gas-side end of the contacting material face at the point of contact.

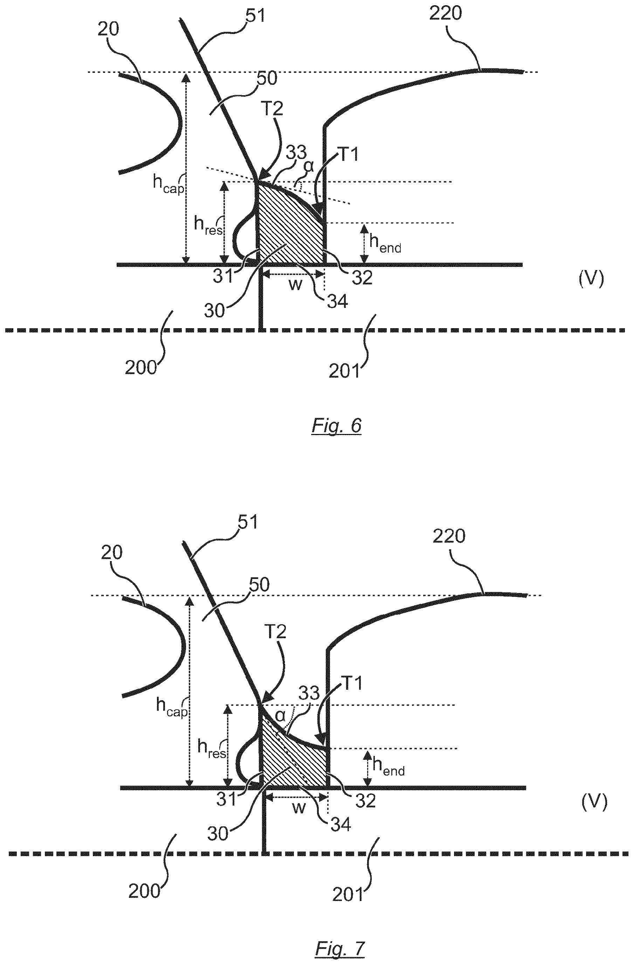

However, the gas-side face 33 may have a curved extension, as exemplified in Figs. 6 and 7. In this case, the gradient angle $\alpha$ is defined as an angle between a line perpendicular to the surface of the insulator and a tangential line in the point of the gas-side end of the contacting material face 33.

In the embodiment, the gradient angle $\alpha$ is smaller than 80°. Preferably the angle $\alpha$ is in a range of 30° to 60°. Examples for different preferential gradient angles $\alpha$ in the case of linear gradients are shown in Figs. 3 and 4. Examples for different preferential gradient angles $\alpha$ in the case of curved shapes of the gas-side face 33 are shown in Figs. 6 and 7. An angle having the above-mentioned values may help to ensure a desired field distribution.

According to certain aspects, the gap distance substantially corresponds to the total width w of the contacting element 30. The relationship of the total width w to a minimum height $h_{cap}$ of the electrode 10, 20, 210, 220 which provides the definite potential fulfils the following expression: $0.1 \leq w/h_{cap} \leq 0.7$.

By a ratio or relationship as described above, a sufficient current carrying capability and a sufficient gas gap can be ensured.

According to certain aspects, the relationship of the first height $h_{res}$ of the contacting element 30 to a minimum height $h_{cap}$ of the electrode 10, 20, 210, 220 fulfils the following expression:

$$0.1 \leq \frac{h_{res}}{h_{cap}} \leq 0.7.$$

By a ratio or relationship as described above, the ratio between the effective resistive and capacitive screening height is kept low to ensure that the field is within an acceptable limit.

By the contacting element 30 a triple point T1 between the between the insulating gas, the contacting element 30 and the voltage defining electrode 201, 210, 220, and a triple point T2 between the insulating gas, the contacting element 30 and the insulator surface 51 are introduced. By the contacting element having a first height and a second height, a non-negligible tangential field component is introduced by the contacting element 30. This field component helps to give the electric field a desired distribution, e. g. to ensure that particles which may be present in the insulating gas end up at the triple point T1. Here, the electric field is minimized.

It is to be noted that the contacting element 30 is not limited to be arranged on the high-voltage side of the system, as shown in the regions V in Figs. 3, 4, 6, 7. The contacting element 30 may also be arranged on the ground side of the system.

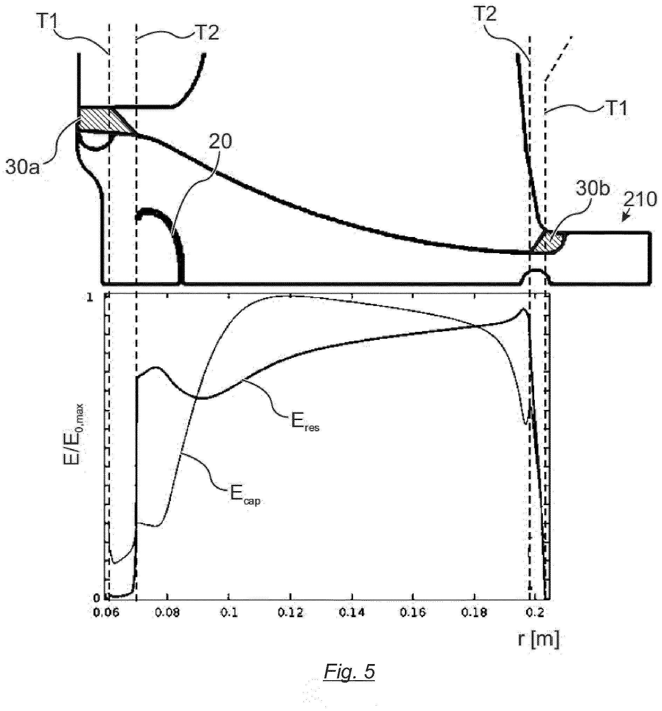

Fig. 5 shows a combined diagram showing an arrangement of contacting elements 30a, 30b of a high-voltage insulator 100 according to an embodiment of the present disclosure, and a corresponding field distribution of the resistive electric field $E_{res}$ and the capacitive electric field $E_{cap}$ on a gas side along the insulator surface 51 and the contacting elements surface.

In Fig. 5, in the upper part, one contacting element 30a is arranged on the high-voltage side of the system, and another contacting element 30b is arranged on the grounded side of the system. Dashed lines correspond to the triple points T1, T2 mentioned above, for each contacting element 30a, 30b. In the lower part of Fig. 5, the dashed lines help to assess the respective electric field strengths $E_{res}$, $E_{cap}$ at the triple points T1, T2 for each contacting element 30a, 30b.

As can be seen, the capacitive and resistive fields at the triple points T1 for each contacting element 30a, 30b are limited. The field distribution between the triple point T2 of contacting element 30a and the triple point T2 of contacting element 30b is favorable (i. e., sufficiently low) in the gas gap regions and on the portion of the insulator surface 51 touching these gas gap regions.

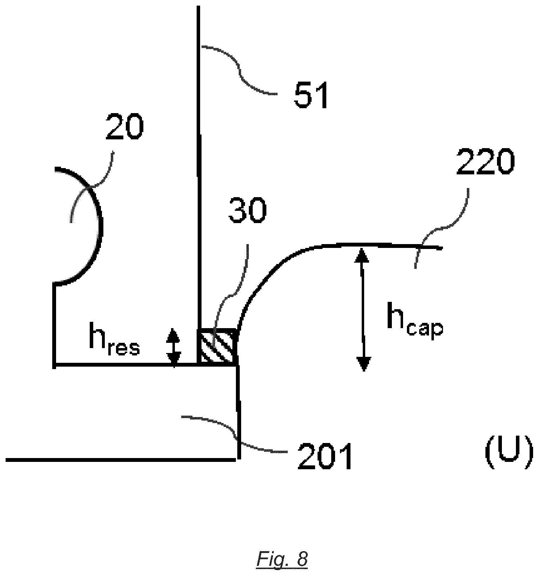

Fig. 8 shows a region U of Figure 1b for explanatory purposes. One contacting element 30 of a high voltage insulator rod 100 is contacting the surface of the insulator 51 with one electrode 220 at a defined potential. As in the examples discussed above, the contacting element 30 connects a predetermined height of the insulator surface 51 to a definite potential. The contacting element 30 extends away from the insulator surface 51 up to an end face where it contacts the electrode 220. In the explanatory example shown in Fig. 8 and not relating to an embodiment, the contacting element 30 has a substantially uniform height hres from its insulator side face to its end face.

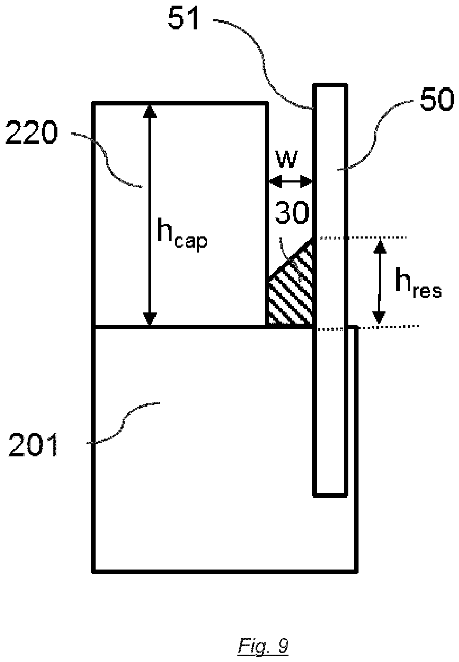

Fig. 9 shows a cross section through a plane B-B' of Figure 1c. One contacting element 30 of a high voltage insulator 100 loop inserted in the groove G of one conductor 201 is contacting the surface of the insulator 51 with one electrode 220 at a defined potential. The contacting element 30 extends from the insulator surface 51 up to an end face where it contacts the electrode 220. In the example shown in Fig. 9, the contacting element 30 has a first height hres on the contacting side with the insulator surface 51, and the height gradually decreases towards the end face of contact with the electrode 220.

**Claims**

1. A high-voltage insulator arrangement, comprising:

   a high-voltage insulator (100) for insulation of a conductor of a DC gas- insulated electrical system, the insulator (100) comprising an insulator body (50) and an insulator surface (51), wherein the electrical conductivity of the insulator surface (51) is higher than the electrical conductivity of the insulator body (50); and
   a contacting element (30),

   wherein the contacting element (30) comprises an insulator side face (31) having a first height (hres) for electrically connecting a predetermined length of the insulator surface (51) to a definite potential, the contacting element (30) further extending by a total width (w) in a width direction away from the insulator surface (51) up to an end face (32),
   wherein a second height (hend) of the contacting element (30) at the end face (32) is lower than the first height (hres), wherein the height of the contacting element (30) from the first height (hres) to the second height (hend) reduces at a gradient angle ($\alpha$) such that a gas side face (33) of the contacting element (30), which joins the insulator side face (31) to the end face (32) and which is configured to be exposed to the insulation gas, is slanted.

2. The high-voltage insulator arrangement according to claim 1, wherein the contacting element (30) is different from an enclosure of the DC gas-insulated electrical system and different from a conductor of the DC gas-insulated electrical system.

3. The high-voltage insulator arrangement according to claim 1 or claim 2, wherein the end face (32) of the contacting element (30) is configured to abut on an element of the DC gas-insulated electrical system on the definite electrical potential, preferably a ground potential or a conductor potential, or wherein a conductor-side face (34) of the contacting element (30) is configured to abut on an element of the DC gas-insulated electrical system on the definite electrical potential, preferably a ground potential or a conductor potential.

4. The high-voltage insulator arrangement according to any one of the preceding claims,
   wherein the gradient angle ($\alpha$) is smaller than 80°, wherein the gradient angle ($\alpha$) is typically within a range of 30° to 60°.

5. The high-voltage insulator arrangement according to claim 2,
   wherein the height of the contacting element (30) from the first height (hres) to the second height (hend) reduces in a substantially linear manner.

6. The high-voltage insulator arrangement according to any one of the preceding claims,
   wherein the contacting element (30) is formed as a contacting ring continuously extending around a periphery of the insulator body (50).

7. The high-voltage insulator arrangement according to any one of the preceding claims,
   wherein the contacting element (30) comprises a combination of at least one filler material and a base material, the base material being optionally a compliant material and preferably comprising any one or a combination of ethylene propylene diene, polyolefine, polyester, fluropolymer elastomer.

8. The high-voltage insulator arrangement according to claim 7, wherein the filler material comprises a conductive material, optionally carbon black.

9. The high-voltage insulator arrangement according to claim 7, wherein the filler material comprises a field-grading material, optionally any one or a combination of $Cr_2O_3$, $Fe_2O_3$, $TiO_2$, SiC, ZnO.

10. A gas-insulated electrical system for DC operation comprising the high-voltage insulator arrangement according to any one of the preceding claims, the gas-insulated electrical system further comprising at least one electrically conductive element (200, 210, 220) on a definite electrical potential, and a space filled with insulation gas, wherein the gas side face (33) of the contacting element (30) is exposed to the insulation gas,
wherein a face (32, 34) different from the insulator side face (31) of the contacting element (30), typically the end face (32) or the conductor-side face (34), is contacted to the electrically conductive element (10, 20, 200, 210, 220).

11. The gas-insulated electrical system according to claim 10,
wherein the electrically conductive element is an electrode (200, 210, 220), typically a shielding electrode or an electrically conductive enclosure, which is arranged at a gap distance from the insulator surface (51).

12. The gas-insulated electrical system according to claim 11,
wherein the gap distance substantially corresponds to the total width (w) of the contacting element (30), wherein the relationship of the total width (w) to a minimum height (heap) of the electrode (10, 20, 210, 220) fulfils the following expression:

$$0.1 \leq {}^{w}\!/_{h_{cap}} \leq 0.7.$$

13. The gas-insulated electrical system according to claim 11 or 12, wherein the relationship of the first height ($h_{res}$) of the contacting element (30) to a minimum height (heap) of the electrode (10, 20, 210, 220) fulfils the following expression:

$$0.1 \leq {}^{h_{res}}\!/_{h_{cap}} \leq 0.7.$$

14. The gas-insulated electrical system according to any one of claims 10 to 13, wherein at least one electrically conductive element is a DC conductor (200).

15. Use of a high-voltage insulator arrangement according to any one of claims 1 to 9 in a gas-insulated electrical system of any one of claims 10 to 14, typically in a gas- insulated high-voltage apparatus, wherein a DC voltage is applied to the DC conductor (200).

**Patentansprüche**

1. Hochspannungsisolatoranordnung, umfassend:

einen Hochspannungsisolator (100) zum Isolieren eines Leiters eines gasisolierten elektrischen Gleichstromsystems, wobei der Isolator (100) einen Isolatorkörper (50) und eine Isolatoroberfläche (51) umfasst, wobei die elektrische Leitfähigkeit der Isolatoroberfläche (51) größer als die elektrische Leitfähigkeit des Isolatorkörpers (50) ist; und
ein Kontaktelement (30), wobei das Kontaktelement (30) eine Isolatorseitenfläche (31) umfasst, die eine erste Höhe (hres) zum elektrischen Verbinden einer vorbestimmten Länge der Isolatoroberfläche (51) mit einem bestimmten Potential aufweist, wobei sich das Kontaktelement (30) außerdem um eine Gesamtbreite (w) in einer Breitenrichtung von der Isolatoroberfläche (51) weg bis zu einer Endfläche (32) erstreckt, wobei eine zweite Höhe (hend) des Kontaktelements (30) an der Endfläche (32) geringer als die erste Höhe (hres) ist, wobei die Höhe des Kontaktelements (30) von der ersten Höhe (hres) zur zweiten Höhe (hend) durch einen Steigungswinkel ($\alpha$) so verringert wird, dass eine gasseitige Fläche (33) des Kontaktelements (30), welche die Isolatorseitenfläche (31) mit der Endfläche (32) verbindet und die ausgelegt ist, um dem Isolationsgas ausgesetzt zu werden, abgeschrägt ist.

2. Hochspannungsisolatoranordnung nach Anspruch 1, wobei das Kontaktelement (30) verschieden von einer Umhüllung des gasisolierten elektrischen Gleichstromsystems und verschieden von einem Leiter des gasisolierten elektrischen Gleichstromsystems ist.

3. Hochspannungsisolatoranordnung nach Anspruch 1 oder Anspruch 2, wobei die Endfläche (32) des Kontaktelements (30) ausgelegt ist, um an ein Element des gasisolierten elektrischen Gleichstromsystems mit dem bestimmten Potential, vorzugsweise einem Erdpotential oder einem Leiterpotential, anzustoßen, oder wobei eine leiterseitige Fläche (34) des Kontaktelements (30) ausgelegt ist, um an ein Element des gasisolierten elektrischen Gleichstromsystems mit dem bestimmten Potential, vorzugsweise einem Erdpotential oder einem Leiterpotential, anzustoßen.

4. Hochspannungsisolatoranordnung nach einem der vorhergehenden Ansprüche, wobei der Steigungswinkel ($\alpha$) kleiner als 80° ist, wobei der Steigungswinkel ($\alpha$) typischerweise in einem Bereich von 30° bis 60° liegt.

5. Hochspannungsisolatoranordnung nach Anspruch 2, wobei sich die Höhe des Kontaktelements (30) von der ersten Höhe ($h_{res}$) zur zweiten Höhe ($h_{end}$) in einer im Wesentlichen linearen Weise verringert.

6. Hochspannungsisolatoranordnung nach einem der vorhergehenden Ansprüche, wobei das Kontaktelement (30) als ein Kontaktring gebildet ist, der sich durchgehend um einen Umfang des Isolierkörpers (50) erstreckt.

7. Hochspannungsisolatoranordnung nach einem der vorhergehenden Ansprüche, wobei das Kontaktelement (30) eine Kombination aus mindestens einem Füllmaterial und einem Grundmaterial umfasst, wobei das Grundmaterial optional ein nachgiebiges Material ist und vorzugsweise ein beliebiges oder eine Kombination von Ethylen-Propylen-Dien, Polyolefin, Polyester, Fluorpolymer-Elastomer umfasst.

8. Hochspannungsisolatoranordnung nach Anspruch 7, wobei das Füllmaterial ein leitfähiges Material und optional Ruß umfasst.

9. Hochspannungsisolatoranordnung nach Anspruch 7, wobei das Füllmaterial ein feldsteuerndes Material und optional ein beliebiges oder eine Kombination von $Cr_2O_3$, $Fe_2O_3$, $TiO_2$, SiC, ZnO umfasst.

10. Gasisoliertes Elektrosystem für einen Gleichstrombetrieb, das die Hochspannungsisolatoranordnung nach einem der vorhergehenden Ansprüche umfasst, wobei das gasisolierte Elektrosystem außerdem mindestens ein elektrisch leitfähiges Element (200, 210, 220) mit einem bestimmten elektrischen Potential und einen mit einem Isolationsgas gefüllten Raum umfasst, wobei die gasseitige Fläche (33) des Kontaktelements (30) dem Isolationsgas ausgesetzt ist, wobei eine Fläche (32, 34), die verschieden von der Isolatorseitenfläche (31) des Kontaktelements (30) ist, typischerweise die Endfläche (32) oder die leiterseitige Fläche (34), mit dem elektrisch leitfähigen Element (10, 20, 200, 210, 220) in Kontakt gebracht wird.

11. Gasisoliertes Elektrosystem nach Anspruch 10, wobei das elektrisch leitfähige Element eine Elektrode (200, 210, 220), typischerweise eine Abschirmelektrode, oder eine elektrisch leitfähige Umhüllung ist, die in einem Spaltabstand von der Isolatoroberfläche (51) angeordnet ist.

12. Gasisoliertes Elektrosystem nach Anspruch 11, wobei der Spaltabstand im Wesentlichen der Gesamtbreite (w) des Kontaktelements (30) entspricht, wobei die Beziehung der Gesamtbreite (w) zu einer minimalen Höhe ($h_{cap}$) der Elektrode (10, 20, 210, 220) den folgenden Ausdruck erfüllt:

$$0,1 \leq w/h_{cap} \leq 0,7.$$

13. Gasisoliertes Elektrosystem nach Anspruch 11 oder 12, wobei die Beziehung der ersten Höhe ($h_{res}$) des Kontaktelements (30) zu einer minimalen Höhe ($h_{cap}$) der Elektrode (10, 20, 210, 220) den folgenden Ausdruck erfüllt:

$$0,1 \leq h_{res}/h_{cap} \leq 0,7.$$

14. Gasisoliertes Elektrosystem nach einem der Ansprüche 10 bis 13, wobei mindestens ein elektrisch leitfähiges Element ein Gleichstromleiter (200) ist.

15. Verwendung einer Hochspannungsisolatoranordnung nach einem der Ansprüche 1 bis 9 in einem gasisolierten Elektrosystem nach einem der Ansprüche 10 bis 14, typischerweise in einer gasisolierten Hochspannungsvorrichtung, wobei eine Gleichspannung an den Gleichstromleiter (200) angelegt wird.

**Revendications**

1. Agencement d'isolation haute tension, comprenant :

un isolant haute tension (100) pour l'isolation d'un conducteur d'un système électrique à isolation gazeuse en courant continu, l'isolant (100) comprenant un corps isolant (50) et une surface isolante (51), la conductivité électrique de la surface isolante (51) étant supérieure à la conductivité électrique du corps isolant (50) ; et
un élément de contact (30),
l'élément de contact (30) comprenant une face côté isolant (31) ayant une première hauteur ($h_{res}$) pour connecter électriquement une longueur prédéterminée de la surface isolante (51) à un potentiel défini, l'élément de contact (30) s'étendant en outre par une largeur totale (w) dans une direction de largeur s'éloignant de la surface isolante (51) vers une face d'extrémité (32), une seconde hauteur ($h_{end}$) de l'élément de contact (30) au niveau de la face d'extrémité (32) étant inférieure à la première hauteur ($h_{res}$), la hauteur de l'élément de contact (30) de la première hauteur ($h_{res}$) à la seconde hauteur ($h_{end}$) diminuant selon un angle d'inclinai-

son ($\alpha$) tel qu'une face côté gaz (33) de l'élément de contact (30), qui relie la face côté isolant (31) à la face d'extrémité (32) et qui est configurée pour être exposée au gaz isolant, est inclinée.

2. Agencement d'isolation haute tension selon la revendication 1, l'élément de contact (30) étant différent d'une enceinte du système électrique à isolation gazeuse en courant continu et différent d'un conducteur du système électrique à isolation gazeuse en courant continu.

3. Agencement d'isolation haute tension selon la revendication 1 ou la revendication 2, la face d'extrémité (32) de l'élément de contact (30) étant configurée pour venir en butée contre un élément du système électrique à isolation gazeuse en courant continu au potentiel électrique défini, de préférence un potentiel de masse ou un potentiel de conducteur, ou une face côté conducteur (34) de l'élément de contact (30) étant configurée pour venir en butée contre un élément du système électrique à isolation gazeuse en courant continu au potentiel électrique défini, de préférence un potentiel de masse ou un potentiel de conducteur.

4. Agencement d'isolation haute tension selon l'une quelconque des revendications précédentes, l'angle d'inclinaison ($\alpha$) étant inférieur à 80°, l'angle d'inclinaison ($\alpha$) se situant typiquement dans une plage de 30° à 60°.

5. Agencement d'isolation haute tension selon la revendication 2,
la hauteur de l'élément de contact (30) de la première hauteur ($h_{res}$) à la seconde hauteur ($h_{end}$) diminuant de manière sensiblement linéaire.

6. Agencement d'isolation haute tension selon l'une quelconque des revendications précédentes, l'élément de contact (30) étant formé comme un anneau de contact s'étendant de manière continue autour d'une périphérie du corps isolant (50).

7. Agencement d'isolation haute tension selon l'une quelconque des revendications précédentes, l'élément de contact (30) comprenant une combinaison d'au moins un matériau de remplissage et un matériau de base, le matériau de base étant éventuellement un matériau conforme et comprenant de préférence l'un quelconque ou une combinaison d'éthylène-propylène-diène, de polyoléfine, de polyester, d'élastomère fluropolymère.

8. Agencement d'isolation haute tension selon la revendication 7, le matériau de remplissage comprenant un matériau conducteur, éventuellement du noir de carbone.

9. Agencement d'isolation haute tension selon la revendication 7, le matériau de remplissage comprenant un matériau à gradient de champ, éventuellement l'un quelconque ou une combinaison de $Cr_2O_3$, $Fe_2O_3$, $TiO_2$, SiC, ZnO.

10. Système électrique à isolation gazeuse pour un fonctionnement en courant continu comprenant l'agencement d'isolation haute tension selon l'une quelconque des revendications précédentes, le système électrique à isolation gazeuse comprenant en outre au moins un élément électriquement conducteur (200, 210, 220) à un potentiel électrique défini, et un espace rempli de gaz isolant, la face côté gaz (33) de l'élément de contact (30) étant exposée au gaz isolant,
une face (32, 34) différente de la face côté isolant (31) de l'élément de contact (30), typiquement la face d'extrémité (32) ou la face côté conducteur (34), étant mise en contact avec l'élément électriquement conducteur (10, 20, 200, 210, 220).

11. Système électrique à isolation gazeuse selon la revendication 10, l'élément électriquement conducteur étant une électrode (200, 210, 220), typiquement une électrode de blindage ou une enceinte électriquement conductrice, qui est agencée à une distance d'écartement de la surface isolante (51).

12. Système électrique à isolation gazeuse selon la revendication 11, la distance d'écartement correspondant sensiblement à la largeur totale (w) de l'élément de contact (30), la relation entre la largeur totale (w) et une hauteur minimale ($h_{eap}$) de l'électrode (10, 20, 210, 220) satisfaisant la formule suivante :

$$0{,}1 \leq \frac{w}{h_{eap}} \leq 0{,}7 \, .$$

13. Système électrique à isolation gazeuse selon la revendication 11 ou 12, la relation entre la première hauteur ($h_{res}$) de l'élément de contact (30) et une hauteur minimale ($h_{eap}$) de l'électrode (10, 20, 210, 220) satisfaisant la formule suivante :

$$0{,}1 \leq \frac{h_{res}}{h_{eap}} \leq 0{,}7 \, .$$

14. Système électrique à isolation gazeuse selon l'une quelconque des revendications 10 à 13, au moins un élément électriquement conducteur étant un conducteur de courant continu (200).

15. Utilisation d'un agencement d'isolation haute tension selon l'une quelconque des revendications 1 à 9 dans un système électrique à isolation gazeuse selon l'une quelconque des revendications 10 à 14, typiquement dans un appareil haute tension à isolation gazeuse, une tension continue étant appliquée au conducteur de courant continu (200).

Fig. 1a

_Fig. 1b_

*Fig. 1c*

*Fig. 2*

*Fig. 3*

*Fig. 4*

_Fig. 5_

*Fig. 6*

*Fig. 7*

*Fig. 8*

_Fig. 9_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0937446 A
- DE 2625071 A1
- JP S5795110 A
- EP 0577346 A2
- EP 2922162 A1
- US 4161621 A
- DE 3634946 A1